**Europäisches Patentamt**

**European Patent Office**

**Office européen des brevets**

(11) Veröffentlichungsnummer : **0 407 751 B1**

(12) **EUROPÄISCHE PATENTSCHRIFT**

(45) Veröffentlichungstag der Patentschrift :
**11.11.92 Patentblatt 92/46**

(21) Anmeldenummer : **90111252.4**

(22) Anmeldetag : **14.06.90**

(51) Int. Cl.⁵ : **B60T 15/20**

(54) **Relaisventil für Druckluftbremsanlagen in Kraftfahrzeugen.**

(30) Priorität : **08.07.89 DE 3922566**

(43) Veröffentlichungstag der Anmeldung :
**16.01.91 Patentblatt 91/03**

(45) Bekanntmachung des Hinweises auf die
Patenterteilung :
**11.11.92 Patentblatt 92/46**

(84) Benannte Vertragsstaaten :
**ES FR GB IT**

(56) Entgegenhaltungen :
**EP-A- 0 249 697**
**EP-A- 0 314 932**
**DE-A- 3 612 369**

(73) Patentinhaber : **GRAU GMBH**
**Eppelheimer Strasse 76**
**W-6900 Heidelberg (DE)**

(72) Erfinder : **Grüner, Hans**
**Heidelbergerstrasse 53**
**W-6803 Edingen-Neckarhausen (DE)**

(74) Vertreter : **Rehberg, Elmar, Dipl.-Ing.**
**Postfach 3162 Am Kirschberge 22**
**W-3400 Göttingen (DE)**

## Beschreibung

Die Erfindung bezieht sich auf ein Relaisventil mit den im Oberbegriff des Anspruchs 1 genannten Merkmalen. Solche Steuer- oder Relaisventile werden in der Regel bei modernen Bremsanlagen zweikreisig angesteuert, können aber ohne Weiteres auch in einkreisiger Anordnung und Ausbildung vorgesehen sein.

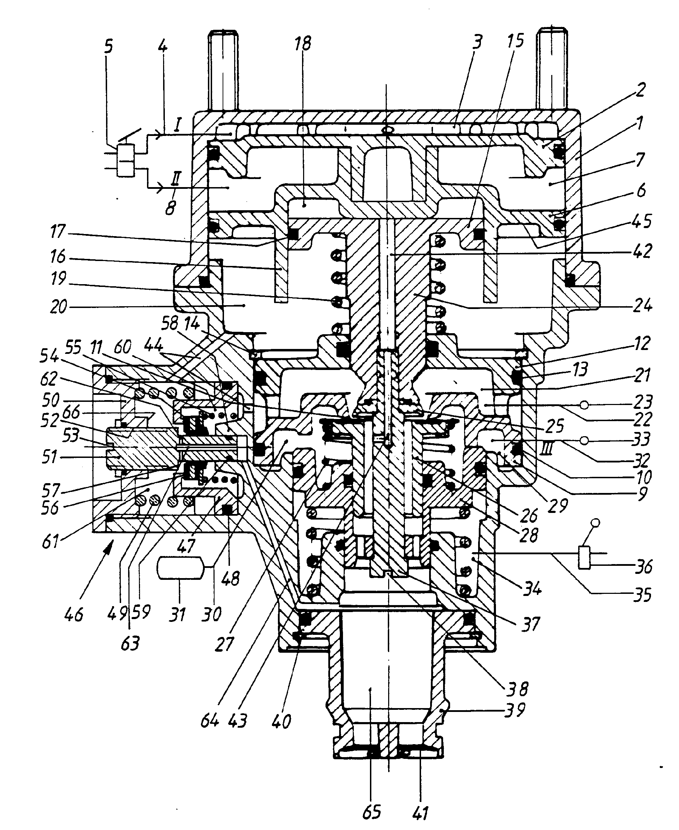

Aus der AT-PS 377 948 ist ein zweikreisig ansteuerbares Relaisventil der eingangs beschriebenen Art bekannt. Es ist ein Steuerkolben vorgesehen, der anströmseitig eine Steuerkammer und eine entsprechende Wirkfläche aufweist, auf der er vom Steuerdruck des einen Kreises beaufschlagt wird. Dieser Steuerkolben des betreffenden Kreises ist zweiteilig ausgebildet, wobei der zweite Teil im Anschluß an eine von der Bremskammer getrennte Wiegekammer eine Wiegefläche aufweist. Das Relaisventil besitzt natürlich einen eigenen Druckluftvorrat bzw. -anschluß und weist einen in seinem Gehäuse aufgehängten Doppelventilkörper auf, der in Verbindung mit entsprechenden Sitzen das Einlaß- und das Auslaßventil des Relaisventils bildet. Wenn Steuerdruck anströmseitig auf den Steuerkolben gelangt, wird das Auslaßventil geschlossen und das Einlaßventil geöffnet, wodurch in der Bremsleitung Bremsdruck ausgesteuert wird, der zunächst jedoch nicht in die Wiegekammer gelangt. Es ist eine Verbindungsleitung zwischen der Bremskammer und der Wiegekammer vorgesehen, in der ein Druckrückhalteventil angeordnet ist, welches seitlich am Gehäuse angeordnet ist. Dieses Druckrückhalteventil kann in der in Figur 8 der AT-PS 377 948 ersichtlichen Ausführungsform einen auf einer Feder abgestützten Schaltkolben aufweisen, in dem ein auf einer weiteren Feder abgestützter Doppelventilkörper angeordnet ist, der mit einem am Schaltkolben vorgesehenen Ventilsitz ein Durchlaßventil für die Belüftung der Wiegekammer und mit einem an einer axial einstellbaren Stellstange vorgesehenen Ventilsitz ein Auslaßventil für die Entlüftung der Wiegekammer bildet. Die Stellstange weist eine als Auslaßleitung dienende axial durchgehende Bohrung auf. Die Stellstange ist mit Hilfe eines Gewindes axial verstellbar, wobei sie selbst in einem Deckel am Gehäuse dichtend gelagert ist. Die Entlüftung der Wiegekammer erfolgt direkt über dieses Druckrückhalteventil in die Atmosphäre. Das Einlaß- und Auslaßventil des Relaisventils besitzt ebenfalls eine zur Atmosphäre führende Auslaßleitung, die zur Entlüftung der Bremsleitung dient. Damit besitzt dieses Relaisventil zwei zur Atmosphäre führende Auslässe, die getrennt voneinander enden, was insofern nachteilig ist, als damit zwei Eindringstellen für Schmutz und Feuchtigkeit am Ventil vorhanden sind, die dann auch mit doppeltem Aufwand durch die Anordnung von Flatterventilen o. dgl. geschützt werden müssen. Das Druckrückhalteventil weist jedoch vorteilhaft bereits die axial einstellbare Stellstange auf, mit welcher ein Teil des Auslaßventils zur Einstellung einer gewünschten Voreilung relativ verschieblich ist. Damit wird der Schließstellung des Auslaßventils eine bestimmte Zusammendrückung und damit eine bestimmte Federkraft der Feder zugeordnet, die den Schaltkolben beaufschlagt. Diese Kraft ist in Verbindung mit der Fläche des Schaltkolbens maßgeblich dafür, wann das Durchlaßventil des Druckrückhalteventils zu der zweiten Wiegekammer öffnet. Dieses bekannte Relaisventil besitzt zwar, wie alle Relaisventile, eine Hysterese, weist aber bereits den Vorteil auf, daß die Voreilung beim Lösen der Bremse beibehalten bleibt.

Auch die DE-AS 1 152 322 zeigt ein gattungsgemäßes Relaisventil, bei dem ebenfalls bereits die Vor- und Nachteile des Relaisventils nach der AT-PS 377 948 auftreten. Die unterschiedliche Ausbildung hinsichtlich der nur einkreisigen Ansteuerbarkeit und der Anordnung einer zweiten Wiegekammer, die immer mit der Bremskammer in Verbindung steht, sind für die vorliegende Erfindung von untergeordneter Bedeutung.

Das somit bekannte Druckrückhalteventil ist dann nachfolgend gemäß der DE-OS 32 10 027 oder auch der DE-OS 35 42 175 nicht mehr seitlich am Gehäuse angeordnet, sondern koaxial zur Hauptachse des Relaisventils im Innern desselben angeordnet worden, wobei jedoch die grundsätzliche Bauart voll übernommen bzw. beibehalten wurde. So besitzt auch dieses Druckrückhalteventil den auf einer Feder abgestützten Schaltkolben, der den Doppelventilkörper trägt. Die axial einstellbare Stellstange ist durchgehend hohl ausgebildet, um eine Auslaßleitung für die Entlüftung der zweiten Wiegekammer zu bilden. Diese Auslaßleitung ist an die Auslaßleitung des Ein- und Auslaßventils des Relaisventils angeschlossen, so daß beide Auslaßleitungen nur über einen Auslaß vorteilhaft gemeinsam zur Atmosphäre führen. Nachteilig an dieser veränderten Plazierung des Druckrückhalteventils ist es, daß die Einstellbarkeit der Voreilung erschwert ist, indem zunächst das den Auslaß abdeckende Flatterventil demontiert werden muß, um dann im Innern des Relaisventils die Stellstange zu verdrehen und damit axial zu verschieben.

Gemäß der DE-OS 37 22 306 ist an einem Relaisventil eine Druckrückhalteeinrichtung vorgesehen, die aus zwei Teilen besteht, wobei der eine Teil koaxial zur Hauptachse des Ventils angeordnet ist, während der andere Teil seitlich angeordnet ist. Dieser seitlich angeordnete Teil ist als Doppelrückschlagventil ausgebildet und besitzt einen über eine Feder angepreßten Ventilkörper, wobei die Vorspannung der Feder über einen Deckel einstellbar ist. Damit wird auch eine Art Druckrückhalteventil gebildet, welches in der Verbindungsleitung zwischen den beiden Wiegekammern angeordnet ist. Dieses Druckrückhalteventil besitzt jedoch keine eigene Entlüftung, so daß die Entlüftung der zweiten Wiegekammer nur in Abhängigkeit von der Druckabsenkung in der ersten Wiegekammer möglich ist.

Ausgehend von dieser Ausgangslage ergibt sich die Problematik, ein Relaisventil bereitzustellen, welches bei einfacher Einstellbarkeit der Voreilung von außen trotzdem nur einen einzigen Auslaß aufweist, über den sowohl die Bremskammer wie auch die Wiegekammer entlüftbar sind.

Erfindungsgemäß wird dies durch die Merkmale des Anspruchs 1 erreicht. Die Stellstange endet nicht mehr vor dem Doppelventilkörper, sondern der Schaltkolben und der Doppelventilkörper sind durchbrochen ausgebildet, so daß die Stellstange durch diese beiden Teile hindurchgeführt ist. Die Stellstange ist nicht mehr durchgehend hohl ausgebildet, sondern besitzt nur noch in einem Teil ihrer axialen Länge in genauer Zuordnung eine Auslaßleitung, über welche die Entlüftung gleichsam nach der anderen Seite der Stellstange erfolgt. Auf dieser anderen Seite, die dem Gehäuseinnenraum des Relaisventils zugekehrt ist, besteht ohne Weiteres die MÖglichkeit, eine Verbindungsleitung vorzusehen, die zu dem ohnehin erforderlichen Auslaß des Ein- und Auslaßventils des Relaisventils führt, so daß auch die zweite Wiegekammer über diesen Auslaß entlüftbar ist. Eine erste Wiegekammer, die üblicherweise vorgesehen ist und in dauernder Verbindung mit der Bremskammer und der Bremsleitung steht, kann auch fehlen oder mit einer relativ klein gestalteten Wiegefläche ausgebildet sein. Dies ist sogar vorteilhaft für einen steilen Einsprung. Die Erfindung läßt sich damit unabhängig davon anwenden, ob nur eine oder letztlich zwei Wiegekammern an dem Steuerkolben gebildet sind. Die Stellstange ist an ihren beiden Enden geführt und damit gleichzeitig auch präzise gelagert. An ihr führt sich wiederum der Doppelventilkörper, der als Ringkörper ausgebildet ist und somit auf einem Teil der Stellstange dichtend gleitet. Die Stellstange besitzt einen Teil des Auslaßventils, welches nun jedoch nicht mehr endseitig, sondern etwa im Mittelbereich angeordnet ist. Ein dort vorgesehener Absatz bildet mit dem Doppelventilkörper das Auslaßventil des Druckhalteventils. Die Stellstange des Druckrückhalteventils ist von außen zum Zweck der Einstellung der Voreilung leicht und unmittelbar zugänglich. Es muß nicht einmal vorher ein Flatterventil entfernt werden. Das neue Relaisventil weist den weiteren Vorteil auf, daß zur Abdeckung des gemeinsamen Auslasses nur ein einziges Flatterventil und somit auch nur eine einzige Schutzvorrichtung vorgesehen sein muß. Die eingestellte Voreilung bleibt vorteilhaft auch beim Lösen der Bremse erhalten.

Der Schaltkolben kann topfförmig ausgebildet sein und das eine Ende der Stellstange kann in einem gehäuseseitigen Fortsatz untergebracht sein, der in den topfförmigen Schaltkolben einragt. Damit wird nicht nur die Stellstange an zwei nahe beieinanderliegenden Stellen gelagert, sondern es ergibt sich der generelle Vorteil, daß das so ausgebildete Druckrückhalteventil eine kurze axiale Baulänge aufweist, obwohl andererseits eine Feder untergebracht werden kann, die eine vergleichsweise große axiale Erstreckung aufweist, so daß ein entsprechender Einstellbereich für die Voreilung gegeben ist. Die Stellstange ist in jedem Fall abgedichtet in einem Gewinde gelagert. Vorteilhaft kann die Stellstange vermittels eines abgedichteten Gewindes an einem Deckel axial verschieblich gelagert sein, wobei der Deckel zugleich ein Auflager für die den Schaltkolben abstützende Feder bildet. Damit ist eine zweifache Einstellbarkeit gegeben. Durch das Einschrauben eines abgedichteten Deckels in das Gehäuse erhält die den Schaltkolben belastende Feder eine Grundvorspannung. Durch die Verstellung der Stellstange erfolgt dann eine Feineinstellung der Voreilung.

Die den Doppelventilkörper beaufschlagende Feder kann gehäuseseitig abgestützt sein. Diese Feder kann beispielsweise auf dem Fortsatz, der in den topfförmigen Schaltkolben einragt, abgestützt sein. Es ist natürlich auch möglich, die den Doppelventilkörper belastende Feder auf dem Schaltkolben selbst abzustützen, was insofern vorteilhaft ist, als sich die Vorspannkraft dieser Feder bei Veränderung der Einstellung der Voreilung nicht mit verändert, sondern konstant bleibt.

Der Deckel kann mit einem den maximalen Hub des Schaltkolbens begrenzenden Anschlag versehen sein. Damit kann die Verbindungsleitung, die von dem Druckrückhalteventil zu der Wiegekammer führt, so relativ plaziert werden, daß der Schaltkolben die Einmündung der Verbindungsleitung nicht überfahren und nicht abdecken kann.

Die Erfindung wird anhand eines bevorzugten Ausführungsbeispiels weiter erläutert und beschrieben. In der Zeichnung ist ein Schnitt durch ein zweikreisig ansteuerbares Anhängersteuerventil dargestellt.

Das Relaisventil weist ein zweckmäßigerweise mehrteiliges Gehäuse 1 auf, in welchem die verschiedenen zylindrischen Flächen zur Aufnahme der Innenteile vorgesehen sind. Im oberen Bereich des Gehäuses 1 ist ein Steuerkolben 2 dichtend geführt, der im Gehäuse 1 eine Steuerkammer 3 abteilt, die über eine Leitung 4 von einem Zweikreisbremsventil 5 beaufschlagbar ist. Der Steuerkolben 2 und die Steuerkammer 3 mögen den ersten Steuerkreis I bilden. Unterhalb des Steuerkolbens 2, aber gleichsinnig mit diesem bewegbar, ist ein weiterer Steuerkolben 6 im Gehäuse 1 dichtend geführt, der im Gehäuse eine Steuerkammer 7 abteilt, die über eine Leitung 8 von dem Zweikreisbremsventil 5 ansprechbar ist. Der Steuerkolben 6 und die Steuerkammer 7 gehören zu einem Steuerkreis II.

Im Gehäuse 1 ist ein Ringkörper 9 mit einer Dichtung 10 ortsfest dicht gelagert, der mit einem vorspringenden Rand 11 einen Bestandteil eines Einlaßventils bildet. Oberhalb des Ringkörpers 9 ist ein Einsatzstück 12 mit Dichtung 13 ebenfalls dichtend und ortsfest gelagert, wobei der Ringkörper 9 und das Einsatzstück 12 von einem Sicherungsring 14 gehalten sind.

Der Steuerkolben 6 kann an sich durchgehend, d. h. ungeteilt ausgebildet sein. Im vorliegenden Fall ist er jedoch für den Anschluß einer Hilfs- und Feststellbremse geteilt ausgebildet. Er weist einen Kolbenteil 15 auf, der in einem Fortsatz 16 mit einer Dichtung 17 dichtend verschiebbar gelagert ist. Der Kolbenteil 15 ist zum Zwecke der Entlüftung eines Raums 18 zwischen ihm und dem Steuerkolben 6 hohl ausgebildet. Der Kolbenteil 15 ist auf einer Rückführfeder 19 abgestützt, die andererseits an dem Einsatzstück 12 gelagert ist. Damit wird zwischen dem Steuerkolben 6 und dem Kolbenteil 15 sowie dem Einsatzstück 12 eine Wiegekammer 20 abgeteilt. Zwischen Einsatzstück 12 und Ringkörper 9 ist eine Bremskammer 21 vorgesehen, die in dauernder Verbindung zu einer Bremsleitung 22 und einem dort vorgesehenen Kupplungskopf 23 steht. Der Kolbenteil 15 besitzt einen durch das Einsatzstück 12 dichtend hindurchgeführten Fortsatz 24, der in einer Platte 25 endet, die zusammen mit einem Doppelventilkörper 26 ein Auslaßventil 25, 26 bildet. Das zugehörige Einlaßventil 11, 26 wird von dem Rand 11 und dem Doppelventilkörper 26 gebildet. Der Doppelventilkörper 26 ist auf einer Feder 27 abgestützt, die sich andererseits an einem Steuerkolben 28 abstützt, der ebenfalls im Gehäuse 1 gleitend und dichtend geführt ist. Zwischen Ringkörper 9, Doppelventilkörper 26 und Steuerkolben 28 wird im Gehäuse eine Vorratskammer 29 abgeteilt, die einerseits über eine Leitung 30 an einen Vorratsbehälter 31 angeschlossen ist, während andererseits eine Vorratsleitung 32 zu einem Kupplungskopf 33 zum Anhänger führt. Der Steuerkolben 28 teilt andererseits im Gehäuse 1 eine Steuerkammer 34 ab, die über eine Leitung 35 mit einem Handbremsventil 36 in Verbindung steht, so daß hier ein dritter Steuerkreis III als Hilfs- oder Feststellbremse realisiert ist. Ein Stößel 37 ist in den Fortsatz 24 eingeschraubt, liegt infolge der Kraft der Rückführfeder 19 an dem Steuerkolben 28 an und besitzt in seinem unteren Bereich einen Schlitz 38 zu Montagezwecken. Im unteren Bereich des Gehäuses 1 ist ein Entlüftungsstutzen 39 von einem Sicherungsring 40 gehalten und weist ein Flatterventil 41 auf, welches den einzigen Auslaß in die Atmosphäre abdeckt und durch welches die Entlüftung der Bremskammer 21 bei geöffnetem Auslaßventil 25, 26 stattfindet. Der Fortsatz 24 weist eine Bohrung 42 auf, die sich in Bohrungen 43 in dem Stößel 37 fortsetzt, über welche der Raum 18 durch den hohlen Doppelventilkörper 26 hindurch dauernd an die Atmosphäre angeschlossen sind.

Von der Bremskammer 21 führt eine Verbindungsleitung 44 zu der Wiegekammer 20, die durch eine Wiegefläche 45 an dem Steuerkolben 6 und dem Kolbenteil 15 begrenzt wird. Die Verbindungsleitung 44 besitzt ein Loch in der Gehäusewandung im Anschluß an die Bremskammer 21. Die Wiegekammer 20 kann als einzige Wiegekammer des Steuerkolbens 6, 15 ausgebildet sein, was dann der Fall ist, wenn die den Fortsatz 24 einschließende Dichtung auf dem Einsatzstück 12 den gleichen Durchmesser aufweist wie der Außendurchmesser der Platte 25. Wenn jedoch die Platte 25 einen vergleichsweise kleineren Durchmesser aufweist, ist im Anschluß an die Bremskammer 21 eine erste Wiegefläche an dem Kolbenteil 15 gebildet, welches eine sehr kleine Fläche einschließt. Jedoch wäre dann die Wiegekammer 20 als zweite Wiegekammer zu bezeichnen. Für einen steilen Einsprung des Anhängersteuerventils wirkt sich die Vermeidung einer ersten Wiegekammer an der bezeichneten Stelle positiv aus.

In die Verbindungsleitung 44 zwischen der Bremskammer 21 und der Wiegekammer 20 ist ein Druckrückhalteventil 46 funktionsmäßig eingeschaltet, welches einen topfförmig ausgebildeten Schaltkolben 47 mit Dichtung 48 aufweist, der auf einer Feder 49 abgestützt ist, die andererseits an einem Deckel 50 aufgelagert ist, der dichtend in das Gehäuse 1 eingeschraubt ist, so daß die Feder 49 eine gewisse Grundvorspannung erhält. Im Deckel 50 ist eine Stellstange 51 ebenfalls dichtend vorgesehen und über ein Gewinde 52 verdrehbar und damit axial verschiebbar angeordnet. Die Stellstange 51 besitzt einen Schlitz 53 oder ein anderes, eine Verdrehung gestattendes Teil zum Ansatz eines Verdrehwerkzeugs, der vom Deckel 50 aus nach außen abragend vorgesehen ist, so daß die Einstellung der Vorspannung hier sehr einfach durchgeführt werden kann. In dem topfförmigen Schaltkolben 47 ist ein Doppelventilkörper 54 vorgesehen und auf einer Feder 55 abgestützt, die andererseits am Gehäuse 1 oder auch auf dem Schaltkolben 47 abgestützt sein kann. Der Doppelventilkörper 54 bildet mit einem Rand 56 des Schaltkolbens 47 ein Durchlaßventil 54, 56 und mit einem Absatz 57 an der Stellstange 51 ein Auslaßventil 54, 57. Der Doppelventilkörper 54 ist dichtend auf dem abgesetzten Teil der Stellstange 51 im Anschluß an den Absatz 57 geführt. Der Absatz 57 befindet sich etwa im Mittelbereich der Stellstange 51, so daß diese sowohl durch den Schaltkolben 47 wie auch den Doppelventilkörper 54 hindurchreichend vorgesehen ist. In dem dem Schlitz 53 abgekehrten Endbereich ist die Stellstange 51 in einem Fortsatz 58 des Gehäuses 1 geführt gelagert und über eine Dichtung 59 abgedichtet. Der Fortsatz 58 ragt in den nach dieser Seite offenen Teil des topfförmigen Schaltkolbens 47 hinein. So wird auf der dem Doppelventilkörper 54 zugekehrten Teil des Schaltkolbens 47 eine Einströmkammer 60 gebildet, die in dauernder Verbindung mit der Bremskammer 21 steht. Auf der anderen Seite wird zwischen Schaltkolben 47 und Deckel 50 eine Verbindungskammer 61 gebildet, die in dauernder Verbindung mit der Wiegekammer 20 steht. Die Stellstange 51 weist im Anschluß an den Absatz 57 eine radiale und eine axiale Bohrung 62, 63 auf, die zu Entlüftungszwecken der Wiegekammer 20 über die Verbindungskammer 61 dient und sich in einer Auslaßleitung 64 fortsetzt, die im Gehäuse 1 vorgesehen ist und die zu einer gemeinsamen Auslaßkammer 65 führt, über die auch die Entlüftung der Bremskammer 21 bei geöffnetem Auslaßventil 25, 26 letztlich über das Flatterventil 41 in die Atmosphäre stattfindet.

Die Einstellung des Druckrückhalteventils 46 erfolgt durch Einschrauben des Deckels 50, wodurch die Feder 49 eine gewisse Grundvorspannung erhält. Durch Verdrehen der Stellstange 51 erfolgt dann eine weitere Korrektur der Vorspannung der Feder 49 im Sinne einer Feineinstellung der gewünschten Voreilung. Bei diesem axialen Verstellen der Stellstange 51 wird der das Auslaßventil 54, 57 mitbildende Absatz 57 relativ zu einer gewissen Zusammendrückung der Feder 49 verstellt bzw. eingestellt. Die damit eingestellte Vorspannkraft der Feder 49 bestimmt den Öffnungsdruck des Durchlaßventils 54, 56 in Abhängigkeit von der Wirkfläche des Schaltkolbens 47. Der Deckel 50 kann einen Anschlag 66 aufweisen, der den maximalen Hub bei entsprechender Verstellung der Stellstange 51 so begrenzt, daß die Dichtung 48 des Schaltkolbens 47 die Einmündungsöffnung der Verbindungsleitung 44 in die Verbindungskammer 61 weder überfährt noch abdeckt.

Die Arbeitsweise dieses zweikreisig ansteuerbaren Anhängersteuerventils ist folgende:

In der Figur sind die Teile in einer drucklosen Relativlage dargestellt, wobei lediglich Druckluft aus dem Vorratsbehälter 31 über die Leitung 30 in die Vorratskammer 29 und am Kupplungskopf 33 der Vorratsleitung 32 ansteht. Das Einlaßventil 11, 26 ist geschlossen und das Auslaßventil 25, 26 ist geöffnet. Ebenso ist das Durchlaßventil 54, 56 des Druckrückhalteventils 46 geschlossen und das Auslaßventil 54, 57 geöffnet, so daß die Wiegekammer 20 an die Atmosphäre angeschlossen ist. Bei Aussteuerung eines Steuerdrucks über das Zweikreisbremsventil 5 gelangt Druckluft über die Leitungen 4 und 8 in die beiden Steuerkammern 3 und 7. Jedenfalls bewegt sich der Steuerkolben 6 auch mit seinem Kolbenteil 15 nach unten und nimmt den die Platte 25 tragenden Fortsatz 24 mit, so daß das Auslaßventil 25, 26 schließt und das Einlaßventil 11, 26 öffnet. Druckluft aus der Vorratskammer 29 strömt nun in die Bremskammer 21 und über die Bremsleitung 22 zum Kupplungskopf 23 sowie letztendlich zum Anhängerbremsventil auf dem Anhänger, so daß dann eine Bremsung ausgesteuert wird. Infolge der großen Flächen der Steuerkolben 2 und 6 besitzt dieses Ventil eine kleine Ansprechstufe, d. h. der Druck, der zum Öffnen des Einlaßventils 11, 26 erforderlich ist, ist vergleichsweise klein. Da durch die geometrische Gestaltung des Fortsatzes 24 und der Platte 25 praktisch keine Rückwirkung auf den Steuerkolben 6 über den sich in der Bremskammer 21 aufbauenden Druck erfolgt, besitzt das Relaisventil einen steilen Einsprung. Der zu Beginn einer Bremsung in der Bremskammer 21 ausgesteuerte Druck reicht nicht aus, um die Feder 49 des Druckrückhalteventils 46 zusammenzudrücken. Erst im Lauf einer Steuerdruckerhöhung steigt auch der Druck in der Bremskammer 21, so daß sich der Schaltkolben 47 in Richtung auf den Absatz 57 an der Stellstange 51 in Bewegung setzt. Dabei gleitet der Doppelventilkörper 54 dichtend auf der Stellstange 51, bis er auf den Absatz 57 auftrifft, so daß das Auslaßventil 54, 57 des Druckrückhalteventils 46 geschlossen wird. Damit ist die Verbindung der Wiegekammer 20 zur Atmosphäre unterbrochen und in der fortgesetzten Bewegung des Schaltkolbens 47 öffnet das Durchlaßventil 54, 56, so daß nunmehr Druckluft aus der Bremskammer 21 über die Verbindungsleitung 44 und das geöffnete Durchlaßventil 54, 56 in die Wiegekammer 20 gelangt. Es erfolgt ein entsprechender Druckaufbau in der Wiegekammer 20 und das Druckrückhalteventil 46 nimmt eine Abschlußstellung ein, in der sowohl das Durchlaßventil 54, 56 wie auch das Auslaßventil 54, 57 geschlossen sind. Jeder Druckerhöhung oder Druckerniedrigung in der Bremskammer 21 folgt eine entsprechende Druckerhöhung bzw. -erniedrigung in der Wiegekammer 20, wobei diese beiden Drücke nicht gleich sind, sondern sich entsprechend der Kraft der Feder 49 in der Abschlußstellung des Druckrückhalteventils 46 voneinander unterscheiden. Es ist aber ersichtlich, daß das Anhängersteuerventil, abgesehen von Hystereseverlusten, bei Steuerdruckanstieg die gleiche Voreilung wie bei Steuerdruckabfall aufweist.

**B e z u g s z e i c h e n l i s t e :**

| | | | | |
|---|---|---|---|---|
| 1 | = Gehäuse | 34 | = Steuerkammer |
| 2 | = Steuerkolben | 35 | = Leitung |
| 3 | = Steuerkammer | 36 | = Handbremsventil |
| 4 | = Leitung | 37 | = Stößel |
| 5 | = Zweikreisbremsventil | 38 | = Schlitz |
| 6 | = Steuerkolben | 39 | = Entlüftungsstutzen |
| 7 | = Steuerkammer | 40 | = Sicherungsring |
| 8 | = Leitung | 41 | = Flatterventil |
| 9 | = Ringkörper | 42 | = Bohrung |
| 10 | = Dichtung | 43 | = Bohrung |
| 11 | = Rand | 44 | = Verbindungsleitung |
| 12 | = Einsatzstück | 45 | = Wiegefläche |
| 13 | = Dichtung | 46 | = Druckrückhalteventil |
| 14 | = Sicherungsring | 47 | = Schaltkolben |
| 15 | = Kolbenteil | 48 | = Dichtung |
| 16 | = Fortsatz | 49 | = Feder |
| 17 | = Dichtung | 50 | = Deckel |
| 18 | = Raum | 51 | = Stellstange |
| 19 | = Rückführfeder | 52 | = Gewinde |
| 20 | = Wiegekammer | 53 | = Schlitz |
| 21 | = Bremskammer | 54 | = Doppelventilkörper |
| 22 | = Bremsleitung | 55 | = Feder |
| 23 | = Kupplungskopf | 56 | = Rand |
| 24 | = Fortsatz | 57 | = Absatz |
| 25 | = Platte | 58 | = Fortsatz |
| 26 | = Doppelventilkörper | 59 | = Dichtung |
| 27 | = Feder | 60 | = Einströmkammer |
| 28 | = Steuerkolben | 61 | = Verbindungskammer |
| 29 | = Vorratskammer | 62 | = radiale Bohrung |
| 30 | = Leitung | 63 | = axiale Bohrung |
| 31 | = Vorratsbehälter | 64 | = Auslaßleitung |
| 32 | = Vorratsleitung | 65 | = Auslaßkammer |
| 33 | = Kupplungskopf | 66 | = Anschlag |

# EP 0 407 751 B1

## Patentansprüche

**1.** Mindestens einkreisig ansteuerbares, als Anhängersteueroder Anhängerbremsventil einsetzbares Relaisventil für Druckluftbremsanlagen in Kraftfahrzeugen, mit mindestens einem Steuerkolben (2), der abströmseitig im Anschluß an eine Wiegefläche eine Wiegekammer aufweist, die von einer mit der Bremsleitung in dauernder Verbindung stehenden Bremskammer nur über ein Druckrückhalteventil (46) beaufschlagbar ist, welches einen auf einer Feder abgestützten Schaltkolben (47) aufweist, in dem ein auf einer weiteren Feder abgestützter Doppelventilkörper (54) angeordnet ist, der mit einem am Schaltkolben vorgesehen Ventilsitz ein Durchlaßventil für die Belüftung der Wiegekammer und mit einem an einer axial einstellbaren Stellstange (51) vorgesehenen Ventilsitz ein Auslaßventil für die Entlüftung der Wiegekammer bildet, wobei die Stellstange eine als Auslaßleitung dienende Bohrung aufweist, dadurch gekennzeichnet, daß die Stellstange (51) durch den Doppelventilkörper (54) hindurchgeführt ist und das hindurchgeführte Ende der Stellstange (51) gehäuseseitig dichtend gelagert ist, daß der Doppelventilkörper (54) als Ringkörper auf der Stellstange (51) dichtend geführt ist, und daß die Stellstange (51) etwa in ihrem mittleren Bereich einen den Auslaßventilsitz bildenden Absatz (57) und im Anschluß daran in Richtung auf das hindurchgeführte Ende die Auslaßleitung (62, 63) aufweist.

**2.** Relaisventil nach Anspruch 1, dadurch gekennzeichnet, daß der Schaltkolben (47) topfförmig ausgebildet ist und das Ende der Stellstange (51) in einem gehäuseseitigen Fortsatz (58) untergebracht ist, der in den topfförmigen Schaltkolben (47) einragt.

**3.** Relaisventil nach Anspruch 1 oder 2, dadurch gekennzeichnet, daß die Stellstange (51) vermittels eines abgedichteten Gewindes an einem Deckel (50) axial verschieblich gelagert ist, und daß der Deckel (50) zugleich ein Auflager für die den Schaltkolben (47) abstützende Feder (49) ist.

**4.** Relaisventil nach Anspruch 1, dadurch gekennzeichnet, daß die den Doppelventilkörper (54) beaufschlagende Feder (55) gehäuseseitig abgestützt ist.

**5.** Relaisventil nach Anspruch 3, dadurch gekennzeichnet, daß der Deckel (50) mit einem den maximalen Hub des Schaltkolbens (47) begrenzenden Anschlag (66) versehen ist.

## Claims

**1.** Relay valve which can be triggered by at least one circuit and can be employed as a trailer control valve or trailer brake valve for compressed air brake systems in motor vehicles, having at least one control piston (2), which has a weighing chamber at the downstream end connected to a weighing surface, which weighing chamber can only be subjected to pressure from a brake chamber in continuous connection with a brake conduit via a pressure retention valve (46) which has a selector piston (47) supported on a spring and on which is located a double valve body (54) supported on a further spring, which double valve body (54) forms, together with a valve seat provided on the selector piston, a passage valve for the ventilation of the weighing chamber and, together with a valve seat provided on an axially adjustable setting rod (51), forms an outlet valve for the ventilation of the weighing chamber, the setting rod having a hole acting as outlet conduit, characterised in that the setting rod (51) is led through the double valve body (54) and the end of the setting rod (51) led through is supported so that it seals at the casing end, that the double valve body (54) is guided as an annular body so that it seals on the setting rod (51) and that the setting rod (51) has a step (57) approximately in its central region forming the outlet valve seat and adjoining it the outlet conduit (62, 63) in the direction of the end led through.

**2.** Relay valve according to Claim 1, characterised in that the selector piston (47) is made cup-shaped and the end of the setting rod (51) is accommodated in a casing extension (58) which protrudes into the cup-shaped selector piston (47).

**3.** Relay valve according to Claim 1 or 2, characterised in that the setting rod (51) is supported so that it can be axially displaced by means of a sealed thread on a cover (50) and that the cover (50) is simultaneously an abutment for the spring (49) supporting the selector piston (47).

**4.** Relay valve according to Claim 1, characterised in that the spring (55) acting on the double valve body (54) is supported at the casing end.

7

**5.** Relay valve according to Claim 3, characterised in that the cover (50) is provided with a stop (66) limiting the maximum stroke of the selector piston (47).

## Revendications

**1.** Valve-relais pour systèmes de freinage à air comprimé sur des véhicules à moteur, pouvant être commandée par au moins un circuit de commande, utilisable comme valve de commande d'une remorque ou comme valve de freinage d'une remorque, avec au moins un piston de commande (2) qui présente sur le côté d'échappement, en raccordement à une surface de tarage, une chambre de tarage pouvant être mise en pression à partir d'une chambre de freinage se trouvant en liaison permanente avec la conduite de frein, ceci seulement à travers une soupape de retenue (46) qui présente un piston de commutation (47) prenant appui contre un ressort, dans laquelle est disposé un clapet double (54) prenant appui contre un autre ressort,ce clapet constituant, avec un siège de clapet prévu sur le piston de commutation, une soupape de passage pour l'alimentation en air de la chambre de tarage et constituant, avec un siège de clapet prévu sur une tige de réglage (51) réglable axialement, une soupape d'échappement pour la décompression de la chambre de tarage, la tige de réglage présentant une forure servant de conduite d'échappement,

**caractérisée** en ce que la tige de réglage (51) traverse le clapet double (54) et que l'extrémité traversante de la tige de réglage (51) est montée de manière étanche du côté du boîtier, en ce que le clapet double (54) est sous la forme d'un corps annulaire guidé de manière étanche sur la tige de réglage (51), et en ce que la tige de réglage (51) présente, approximativement dans sa région médiane, un talon (57) constituant le siège de la soupape d'échappement et présente, à la suite de celle-ci en direction de l'extrémité traversante de la tige de réglage, la conduite d'échappement (62, 63).

**2.** Valve-relais selon la revendication 1, caractérisée en ce que le piston de commutation (47) est en forme de pot et que l'extrémité de la tige de réglage (51) est logée dans un appendice latéral (58) du boîtier qui fait saillie dans le piston de commutation (47) en forme de pot.

**3.** Vanne-relais selon la revendication 1 ou 2, caractérisée en ce que la tige de réglage (51) est montée au moyen d'un filetage étanche dans un couvercle (50) en pouvant être déplacée axialement, et en ce que le couvercle (50) est en même temps un appui pour le ressort (49) appuyant sur le piston de commutation (47).

**4.** Vanne-relais selon la revendication 1, caractérisée en ce que le ressort (55) sollicitant le clapet double (54) prend appui du côté du boîtier.

**5.** Vanne-relais selon la revendication 3, caractérisée en ce que le couvercle (50) est muni d'une butée (66) limitant la course maximale du piston de commutation (47).

8